# EUROPEAN PATENT SPECIFICATION

(11) **EP 1 791 382 B1**
(45) Date of publication and mention of the grant of the patent: **13.05.2009**
(21) Application number: 06023265.9
(22) Date of filing: 08.11.2006
(51) Int. Cl.: H04W 72/06, H04L 12/28

(54) **Client-server system and server apparatus**
Client-Server System und Servervorrichtung
Système client-serveur et appareil serveur

(30) Priority: 10.11.2005 JP 2005326264
(43) Date of publication of application: 30.05.2007
(73) Proprietor: Funai Electric Co., Ltd., Daito-shi, Osaka 574-0013 (JP)
(72) Inventor: Akamatsu, Kenji, Daito-shi Osaka 574-0013 (JP)
(74) Representative: Grünecker, Kinkeldey, Stockmair & Schwanhäusser Anwaltssozietät

(56) References cited:
- GB-A- 2 250 665
- US-A1- 2003 219 002
- US-A1- 2005 070 294
- CERVELLO G ET AL: "Dynamic Channel SDelection (DCS) Scheme for 802.11" IEEE 802.11-00/195, XX, XX, 12 July 2000 (2000-07-12), pages 1-7, XP002213585

## Description

### BACKGROUND OF THE INVENTION

### Field of the Invention

The present invention relates to a client-server system in which a client terminal apparatus communicates with a server apparatus via a wireless LAN and a server apparatus constituting the system.

### Description of the Related Art

Conventionally, there is known a client-server system that a server apparatus to which an AV device such as a video recorder, a PVR (Personal Video Recorder), a DVD (Digital Versatile Disk) player, an audio apparatus or the like are connected and a client terminal apparatus which includes output apparatus such as television apparatus are connected via a wireless LAN or the like.

US 2003/0219002 discloses a communication system in which the radio channel with the highest priority is allocated as the initial channel. When the initial channel interferes with the radio channels used by other apparatuses, the radio channel overlapping those other radio channels is avoided, and the radio channel with the second highest priority is selected. A priority channel table, based on the acquired used frequencies is employed in the slave apparatus and the host apparatus to select an initial channel for communication, so that the time required at the time of communication establishment can be reduced.

US 2005/0070294 refers to a system for mitigating access point data rate degradation with respect to a wireless communication. The available wireless communication channels are assessed in respect to various quality parameters, including power level or strength and duration of a detected interference signal. The "best" channel is then selected based on said quality parameters from all available channels to be the communications channel.

The client-server system transmits the various types of information of the AV device to the client terminal apparatus from the server apparatus, and outputs it from the output apparatus.

For example, in the case of a IEEE802.11a,b,g-type wireless LAN system, when a server apparatus and a client terminal apparatus establish a link via a wireless LAN, the usable channel which is set by the server apparatus is searched among a plurality of channels by the client terminal apparatus after the server apparatus sets one of the channels as the usable channel out of a plurality of channels.

Therefore, in setting the usable channels of the system, a wireless LAN system that sets the channels which are detected by searching for not-used channels or channels having the minimum power interference wave among a plurality of channels by the server apparatus as the usable channels is developed (see Patent Publication 1 for example).

There has been developed a method for controlling a wireless communication module which enables a stable and efficient wireless communication by measuring the connection status of a link according to the power supply status and by switching the usable channel based on the measurement result (See Patent Publication 2, for example).
[Patent Publication 1] Japanese Laid-open Patent Publication No. 2003-249935
[Patent Publication 2]Japanese Laid-open Patent Publication No. 2003-110577

However, in the case of Patent Publication 1 and the like, when a link between a server apparatus and a client terminal apparatus is to be established, the server apparatus must set a usable channel among a plurality of channels and the client terminal apparatus must search the usable channel set by the server apparatus. This causes a problem where the link cannot be promptly established after the power source is turned on. This problem causes an inconvenience to a user because the server apparatus and the client terminal apparatus cannot perform transmission and reception of the information until the link is established.

### SUMMARY OF THE INVENION

In view of the above, it is an object of the present invention to provide a client-server system in which the link via a wireless LAN can be established more promptly to consequently provide a more user-friendly system, and a server apparatus constituting the system.

In order to solve the above problem, in accordance with a first aspect of the present invention, in a client-server system in which a client terminal apparatus and a server apparatus are connected via one of a plurality of channels of a wireless LAN to have communication therebetween,
the server apparatus comprises:
a channel usage search unit which searches a usage of the plurality of channels when the server apparatus is in a no-connection status with the client terminal apparatus;
a priority level deciding unit which decides priority levels of use of the plurality of channels based on a search result of the channel usage search unit;
a server-side usable channel setting unit side which sets the channels as usable channels of the wireless LAN in an order of descending priority levels based on the priority levels decided by the priority level deciding unit when the server apparatus connects to the client terminal apparatus;
a server-side priority level information memory unit which stores priority level information regarding the priority level decided by the priority level deciding unit;
a server-side priority level information updating unit which updates the priority level information stored in the server-side priority level information memory unit every time when the priority levels of the use of the plurality of channels are decided by the priority level deciding unit;
a priority level information transmission unit which transmits the priority level information which is read from the priority level information memory unit to the client terminal apparatus when the server apparatus is in a connection status with the client terminal apparatus; and
a search time information acquisition unit which acquires search time information regarding a search time for the usage of the plurality of channels by the channel usage search unit, wherein:
   the priority level information transmission unit transmits the priority level information including the search time information acquired by the search time information acquisition unit to the client terminal apparatus;
   the client terminal apparatus comprises:
      a priority level information receiving unit which receives the priority level information transmitted from the priority level information transmission unit;
      a client-side priority level information memory unit which stores the priority level information received by the priority level information receiving unit;
      a client-side priority level information updating unit which updates the priority level information stored in the client-side priority level information memory unit every time when the priority level information is received by the priority level information receiving unit; and
      a client-side usable channel setting unit which sets the channels as usable channels of the wireless LAN in the order of descending priority levels based on the priority level according to the priority level information stored in the client-side priority level information memory unit when the client terminal apparatus reconnects to the server apparatus.

According to the first aspect of the present invention, when the server apparatus is in a no-connection status with the client terminal apparatus, the channel usage search unit searches the usage of the plurality of channels of the wireless LAN. The priority level deciding unit decides the priority levels of the plurality of channels based on the search result. The server-side usable channel setting unit can set the channels as usable channels of the wireless LAN in the order of descending priority levels based on the decided priority levels. Therefore, when the wireless LAN link between the client terminal apparatus and the server apparatus is to be established, the usable channels can be set beforehand by considering the usage of the plurality of channels of the wireless LAN in the server apparatus. Thus, the wireless LAN link can be established more promptly and as a result, a user-friendly client-server system can be provided.

When the server apparatus is in a connection status with the client terminal apparatus, the priority level information read from the priority level information memory unit can be transmitted to the client terminal apparatus by the priority level information transmission unit. The client terminal apparatus can set the channels as usable channels in the wireless LAN in the order of descending priority levels by the client-side usable channel setting unit based on the priority levels according to the priority level information received by the priority level information receiving unit. Therefore, when the client terminal apparatus reestablishes the wireless LAN link to the server apparatus after the link is once cut, the client terminal apparatus can set the usable channels by considering the usage of the plurality of channels of the wireless LAN based on the received priority level information at the time of establishment of the wireless LAN link between the client terminal apparatus and the server apparatus.

Furthermore, since the server apparatus comprises the server-side priority level information memory unit for storing the priority level information, when the wireless LAN link between the server apparatus and the client terminal apparatus is to be established, the usable channels can be more promptly set based on the stored priority level information. Moreover, when the server apparatus is connected to the client terminal apparatus, the priority level information read from the priority level information memory unit can be transmitted to the client terminal apparatus by the priority level information transmission unit.

The client terminal apparatus also comprises the client-side priority level information memory unit for storing the priority level information received by the priority level information receiving unit. Thus, when the wireless LAN link to the server apparatus is reestablished after the link is once cut, the usable channels can be more promptly set based on the stored priority level information.

Furthermore, the server apparatus can update the priority level information stored in the server-side priority level information memory unit by the server-side priority level information updating unit every time when the priority levels of the use of the plurality of channels are decided. Thus, the usable channels can be set more properly based on the updated priority level information.

The client terminal apparatus can update the priority level information stored in the client-side priority level information memory unit by the client-side priority level information updating unit every time when the priority level information transmitted from the priority level information transmission unit is received by the priority level information receiving unit. Therefore, when the wireless LAN link to the server apparatus is reestablished after the link is once cut, the usable channels can be set more properly based on the updated priority level information.

Furthermore, the server apparatus can acquire the search time information regarding the search time of the usage of the plurality of channels according to the channel usage search unit by the search time information acquisition unit. Therefore, the usage of the plurality of channels at a predetermined time can be acquired based on the search time information. Thus, the usable channels can be more properly set in accordance with a time zone.

The priority level information transmission unit transmits the priority level information including the search time information acquired by the search time information acquisition unit to the client terminal apparatus. Thus, the client terminal apparatus can set the usable channels more properly based on the acquired search time information in accordance with a time zone when the wireless LAN link to the server apparatus is reestablished after the link is once cut.

In accordance with the second aspect of the present invention, in a client-server system in which a client terminal apparatus and a server apparatus are connected via one of a plurality of channels of a wireless LAN to have communication therebetween,
the server apparatus comprises:
a channel usage search unit which searches a usage of the plurality of channels when the server apparatus is in a no-connection status with the client terminal apparatus;
a priority level deciding unit which decides priority levels of use of the plurality of channels based on the search result of a channel usage search unit; and
a server-side usable channel setting unit which sets the channels as usable channels of the wireless LAN in an order of descending priority levels based on the priority levels decided by the priority level deciding unit when the server apparatus connects with the client terminal apparatus.

According to the second aspect of the present invention, when the server apparatus is in a no-connection status with the client terminal apparatus, the channel usage search unit searches the usage of the plurality of channels of the wireless LAN. The priority level deciding unit decides the priority levels of use of the plurality of channels based on the search result. The server-side usable channel setting unit can set the channels as the usable channels of the wireless LAN in the order of descending priority levels based on the decided priority levels. Therefore, when the wireless LAN link between the client terminal apparatus and the server apparatus is to be established, the usable channels can be set beforehand by considering the usage of the plurality of channels of the wireless LAN in the server apparatus. Thus, the wireless LAN link can be reestablished more promptly and as a result, a user-friendly client-server system can be provided.

Preferably, the server apparatus comprises:
a priority level information transmission unit which transmits priority information regarding the priority levels decided by the priority level deciding unit to the client terminal apparatus when the server apparatus is in a connection status with the client terminal apparatus; and
the client terminal apparatus comprises:
   a priority level information receiving unit which receives the priority level information transmitted from the priority level information transmission unit; and
   a client-side usable channel setting unit which sets the channels as usable channels of the wireless LAN in the order of descending priority levels base on the priority level according to the priority level information received by the priority level information receiving unit when the client terminal apparatus reconnects to the server apparatus.

In the present invention, the same effect is obtained. Further, when the server apparatus is in a connection status with the client terminal apparatus, the priority level information regarding the decided priority levels can be transmitted to the client terminal apparatus by the priority level information transmission unit. The client terminal apparatus can set the usable channels of the wireless LAN in the order of descending priority levels by the client-side usable channel setting unit based on the priority levels according to the priority level information received by the priority level information receiving unit. Therefore, when the wireless LAN link to the server apparatus is reestablished after the link is once cut, the client terminal apparatus can set the usable channels by considering the usage of the plurality of channels of the wireless LAN based on the received priority level information at the time of the wireless LAN link between the client terminal apparatus and the server apparatus is established.

Preferably, the server apparatus comprises:
a server-side priority level information memory unit which stores the priority level information; and
the priority level information transmission unit transmits the priority level information read from the priority level information memory unit to the client terminal apparatus when the server apparatus is connected to the client terminal apparatus; and
the client terminal apparatus comprises:
   a client-side priority level information memory unit which stores the priority level information which is transmitted by the priority level information transmission unit and is received by the priority level information receiving unit.

In the present invention, the same effect is obtained. Further, the server apparatus comprises the server-side priority level information memory unit for storing the priority level information. Therefore, the usable channels can be set more promptly based on the stored priority level information at the time of establishment of the wireless LAN link between the server apparatus and the client terminal apparatus. Furthermore, when the server apparatus is connected to the client terminal apparatus, the priority level information read by the priority level information transmission unit from the priority level information memory unit can be transmitted to the client terminal apparatus.

Moreover, the client terminal apparatus includes the client-side priority level information memory unit for storing the priority level information received by the priority level information receiving unit. Therefore, when the wireless LAN link to the server apparatus is reestablished after the link is once cut, the usable channels can be more promptly set based on the stored priority level information.

Preferably, the server apparatus comprises:
a server-side priority level information updating unit which updates the priority level information stored in the server-side priority level information memory unit every time when the priority levels of the use of the plurality of channels are decided by the priority level deciding unit, and
the client terminal apparatus comprises:
   a client-side priority level information updating unit which updates the priority level information stored in the client-side priority level information memory unit every time when the priority level information which is transmitted from the priority level information transmission unit is received by the priority level information receiving unit.

In the present invention, the same effect is obtained. Further, the server apparatus can update the priority level information stored in the server-side priority level information memory unit by the server-side priority level information updating unit every time when the priority levels of use of the plurality of channels are decided. Therefore, the usable channels can be set more properly based on the updated priority level information.

Further, the client terminal apparatus updates the priority level information stored in the client-side priority level information memory unit by the client-side priority level information updating unit every time when the priority level information transmitted from the priority level information transmission unit is received by the priority level information receiving unit. Thus, when the wireless LAN link to the server apparatus is reestablished after the link is once cut, the usable channels can be set more properly based on the updated priority level information.

Preferably, the server apparatus comprises:
a search time information acquisition unit which acquires search time information regarding a search time of the usage of the plurality of channels by the channel usage search unit; and
the priority level information transmission unit transmits the priority level information including the search time information acquired by the search time information acquisition unit to the client terminal apparatus.

In the present invention, the same effect is obtained. Further, the server apparatus can acquire search time information regarding a search time for searching the usage of the plurality of channels by the search time information acquisition unit. Therefore, the usage of the plurality of channels at a predetermined time can be acquired based on the search time information. Thus, the usable channels can be more properly set in accordance with a time zone.

The priority level information transmission unit transmits the priority level information including the search time information acquired by the search time information acquisition unit to the client terminal apparatus. Therefore, the client terminal apparatus can set the usable channels more properly in accordance with a time zone based on the acquired search time information when the wireless LAN link to the server apparatus is reestablished after the link is once cut.

In accordance with the third aspect of the present invention, in a server apparatus which is connected to a client terminal apparatus via one of a plurality of channels of a wireless LAN to have communication therebetween, comprises:
a channel usage search unit which searches a usage of the plurality of channels when the server apparatus is in a no-connection status with the client terminal apparatus,
a priority level deciding unit which decides priority levels of use of the plurality of channels based on a search result by the channel usage search unit, and
an usable channel setting unit which sets the channels as usable channels of the wireless LAN in an order of descending priority levels based on the priority levels decided by the priority level deciding unit when the server apparatus connects with the client terminal apparatus.

According to the third aspect of the present invention, when the server apparatus is in a no-connection status with the client terminal apparatus, the channel usage search unit searches the usages of the plurality of channels of the wireless LAN. The priority level deciding unit decides the priority levels of use of the plurality of channels based on the search result. The server-side usable channel setting unit can set the usable channels in the wireless LAN in the order of descending priority levels based on the decided priority levels. Therefore, when the wireless LAN link between the client terminal apparatus and the server apparatus is established, the server apparatus can set the usable channels beforehand by considering the usages of the plurality of channels of the wireless LAN. Thus, the wireless LAN link can be reestablished more promptly and as a result, a user-friendly client-server system can be provided.

### BRIEF DISCRIPTION OF THE DRAWINGS

The present invention will become fully understood from the detailed description given hereinafter and the accompanying drawings given by way of illustration only, and thus are not intended as a definition of the limits of the present invention, wherein;
FIG. 1 is a schematic diagram showing an entire structure of a client-server system of one preferable embodiment to which the present invention is applied.
FIG. 2 is a block diagram showing a principal structure of a server apparatus constituting the client-server system of FIG. 1.
FIG. 3 is a schematic diagram showing a priority level table stored in an information memory unit of the server apparatus of FIG. 2.
FIG. 4 is a block diagram showing a principal structure of a client terminal apparatus constituting the client-server system of FIG. 1.
FIG. 5 is a flowchart showing an example of operations in a link establishment process by the client-server system of FIG. 1.
FIG. 6 is a flowchart showing an example of operations in a link establishment process by the client-server system of FIG. 1.

### DETAILED DESCRIPTION OF THE PREFERED EMBODIMENT

Hereinafter, specific embodiments of the present invention will be described with reference to the drawings. However, the scope of the invention is not limited to the illustrated examples.

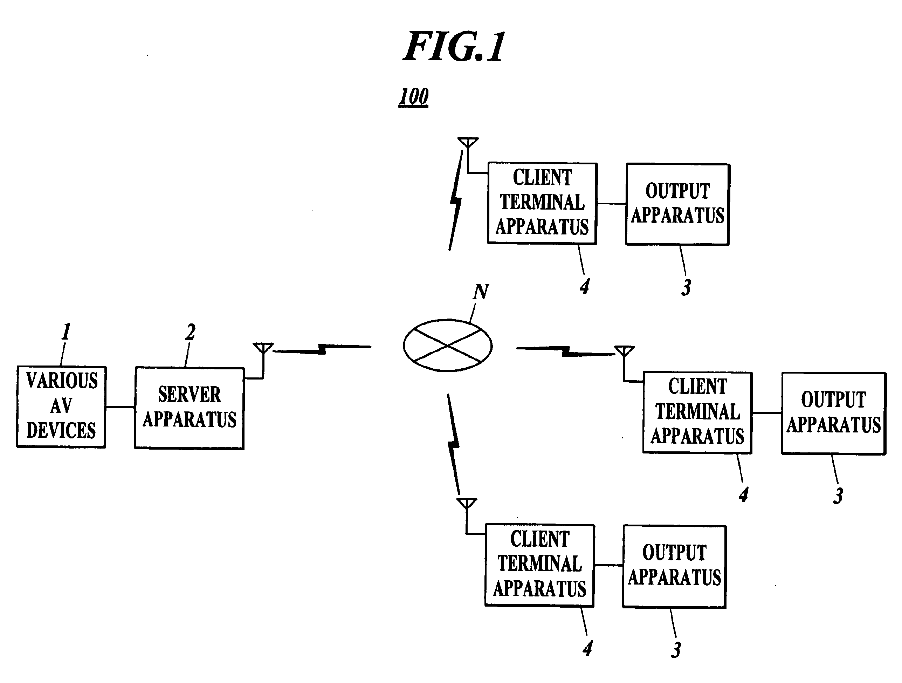

FIG. 1 is a schematic diagram showing the entire structure of a client-server system 100 according to one preferred embodiment using the present invention.

The client-server system 100 of the present embodiment, for example, is a system realized in home. The client-server system 100 comprises, as shown in FIG. 1, a server apparatus 2 to which various types of AV devices 1 is connected, and a plurality of client terminal apparatuses 4 (three client terminal apparatuses are shown in FIG. 1) which is connected to the server apparatus 2 via a wireless LAN N so that information communication can be performed and which an output apparatus 3 that outputs various types of information sent from server apparatus 2 is connected to, and the like.

The wireless network N, for example, may be a wireless LAN (Local Area Network) which complies with the IEEE (Institute of Electrical and Electronic Engineers) 802.11a,b,g standard.

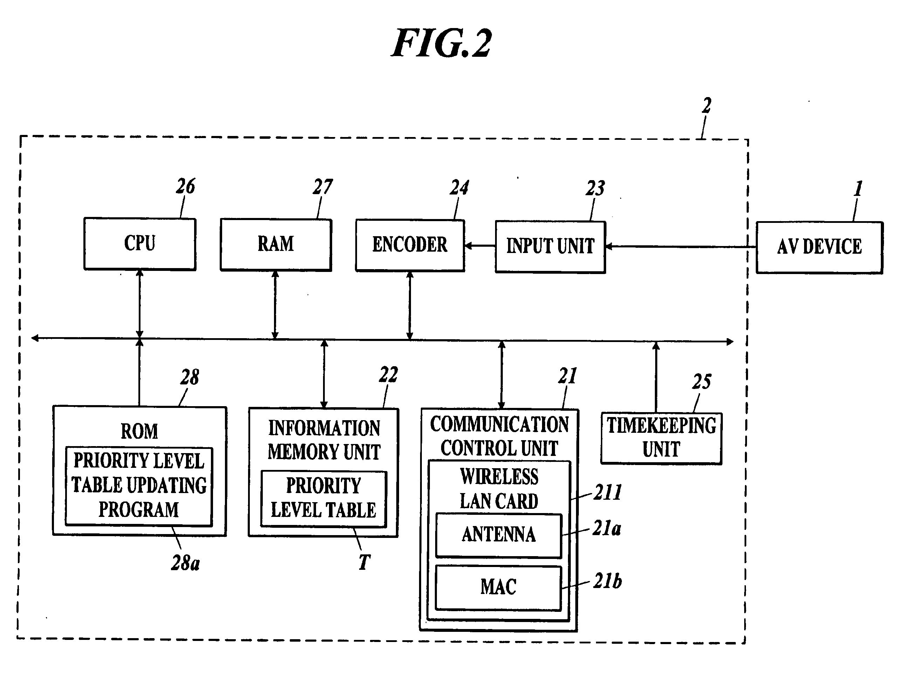

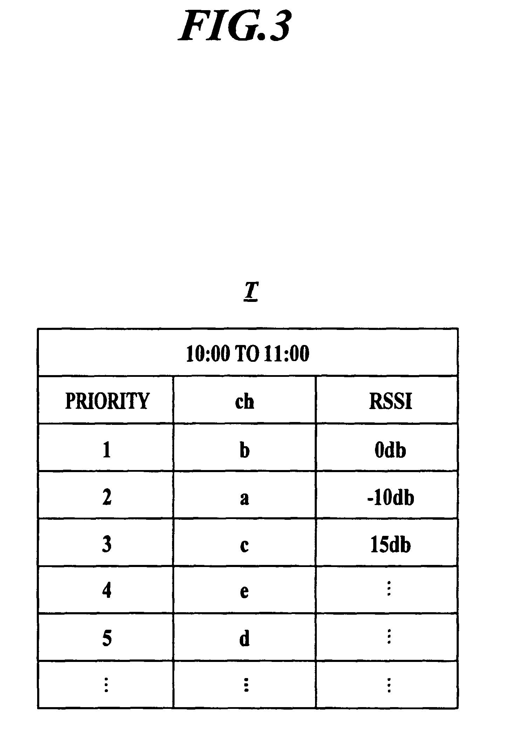

Hereinafter, the server apparatus 2 will be described with reference to FIG. 2 and FIG. 3.

Here, FIG. 2 is a block diagram illustrating the main structure of the server apparatus 2. FIG. 3 is a schematic view illustrating a priority level table T stored in an information memory unit 22 of the server apparatus 2.

The server apparatus 2, for example, as shown in FIG. 2, comprises a communication control unit 21 for providing communication with the client terminal apparatus 4 via the wireless network N, an information memory unit 22 for storing the priority level table T regarding the priority levels for the use of the plurality of channels in the wireless LAN, an input unit 23 for inputting various types of information outputted from the AV device 1, an encoder 24 for encoding various types of information, a timekeeping unit 25, a CPU 26, a RAM 27, a ROM 28, and the like.

The communication control unit 21, for example, sends and receives various types of information to and from the client terminal apparatus 4 via the wireless network N under the control of the CPU 26. Specifically, the communication control unit 21 comprises a wireless LAN card 211 or the like in compliance with the IEEE802.11a,b,g standard that includes an antenna 21a for the transmission and reception of a wireless signal to and from the client terminal apparatus 4 and a media access controller (MAC) 21b for controlling the transmission and reception of an electric wave.

The communication control unit 21, for example, may comprise a signal amplifier (omitted from the drawings) for amplifying a signal transmitted via the antenna 21a. Further, the communication control unit 21, for example, may comprise a switch (omitted from the drawings) for providing a switching between a transmission-related function and a reception-related function when the information is transmitted or received.

The MAC 21b, as a channel usage search unit, for example, searches the status of the use (availability) of each of a plurality of channels of a wireless LAN of predetermined standard when the status is at not-connected state where the wireless link is not established between the server apparatus 2 and the client terminal apparatus 4. Specifically, the MAC 21b, for example, detects an electrical field intensity and an error rates of each channels and determines whether each of these channels has an electric wave interference with a wireless link of another system or not. And the MAC 21b searches the usages of each of the channels based on this determination result.

The MAC 21b also functions as a priority level deciding unit to decide the priority levels for the use of the plurality of channels based on the search result for the usages of a plurality of channels.

Here, the decision of the priority made by the MAC 21b is preferably performed at predetermined time interval. That is, for example, the MAC 21b preferably searches the usages of a plurality of channels every time when the timekeeping unit 25 measures a substantially one hour and decides the priority levels of the channels because the channel usage may be different depending on a time zone of a day.

The decided priority level is transmitted to the information memory unit 22 under the control of the CPU 26 to be stored as the priority level table T (after-mentioned).

Further, the MAC 21b, as a usable channel setting unit of server side, sets the channels as usable channels of the wireless LAN in the order of descending priority levels based on the order of priority which is decided when connecting to the client terminal apparatus 4. Specifically, the MAC 21b sets the channel which has the highest priority level in the priority level table T as the usable channel when the power source of the server apparatus 2 is turned on or when the wireless link is established, and transmits the predetermined synchronization establishment signal (beacon signal)via the set channel at a substantially fixed interval. At this time, when the MAC 21b determines that the channel having the highest priority level is being used in another wireless link, then the MAC 21b sets a channel having the next highest priority level as the usable channel based on the priority level table T and performs the setting of the channel in this order sequentially.

The communication control unit 21 functions as a priority level information transmission unit to transmit the priority level table T regarding the priority levels for the use of a plurality of channels determined under the control of the CPU 26 to the client terminal apparatus 4, when the wireless link between the server apparatus 2 and the client terminal apparatus 4 is established and is in connection status, for example.

Further, the communication control unit 21, for example, transmits various types of image information and audio information which are inputted from the AV device 1 via the input unit 23 and encoded by the encoder 24 to transmit to the client terminal apparatus 4.

As for the information memory unit 22, for example, a recording medium such as a rewritable memory card or HDD or the like can be used. Further, the information memory unit 22 functions as the priority level information memory unit of server side to store the priority level table T (see FIG. 3) that shows the correspondence among priority levels (PRIORITY), a channel (a to e), and a received signal strength (RSSI; dB).

Here, FIG. 3 shows the priority level table T for a time zone from 10:00 to 11:00. However, the priority level tables of other time zones may be stored in the information memory unit 22.

The information memory unit 22 may be incorporated in the main unit of the apparatus or may be connected to outside via a wireless or a wired link.

The encoder 24, for example, encodes various types of information which are inputted from the AV device 1 and transmitted to the client terminal apparatus 4 to an image information having a predetermined file format (e.g., Joint Photographic Experts Group (JPEG), Moving Picture Experts Group phase 2 (MPEG-2)).

As for the AV device 1, for example, a video recorder, a PVR (Personal Video Recorder), a DVD (Digital Versatile Disk) player, an audio apparatus, a BS (Broadcasting Satellite) tuner, a CS (Communication Satellite) tuner, a STB (Set Top Box) or the like can be used.

As for the timekeeping unit 25, for example, a real-time clock can be used. And the timekeeping unit 25 keeps the execution time of various processes, such as a processing time for deciding priority levels for the use of channels, for example.

The CPU (Central Processing Unit) 26 controls each unit of the server apparatus 2 integrally, reads out various programs stored in the ROM 28 and expands the programs on a work area of the RAM 27, and executes various processes based on these programs.

As for the RAM (Random Access Memory) 27, for example, a rewritable memory can be used. And the RAM 27 constitutes a storage area and a work area for programs and various types of data or the like read from the ROM 28 under the control of the CPU 26.

As for the ROM (Read Only Memory) 28, for example, a read-only memory is used. And the ROM 28 stores various programs executed under the control of the CPU 26 and data and the like regarding the processing of these programs. Specifically, the priority level table updating program 28a is stored in the ROM 28. This priority level table updating program 28a makes the CPU 26, as the order of the server-side priority information updating unit, to realize the function according to the process of updating the information of the priority level table T stored in the information memory unit 22 every time when the order of priority for the use of the plurality of channels is decided by the MAC 21b.

That is, when the wireless link between the server apparatus 2 and the client terminal apparatus 4 is cut and is in a no-connection status, the MAC 21b searches the usages of the plurality of channels in the wireless LAN at a predetermined timing and decides the priority levels of the channels. Thereafter, the CPU 26 updates the information of the priority level table T to be the latest information by executing the priority level table update program 28a.

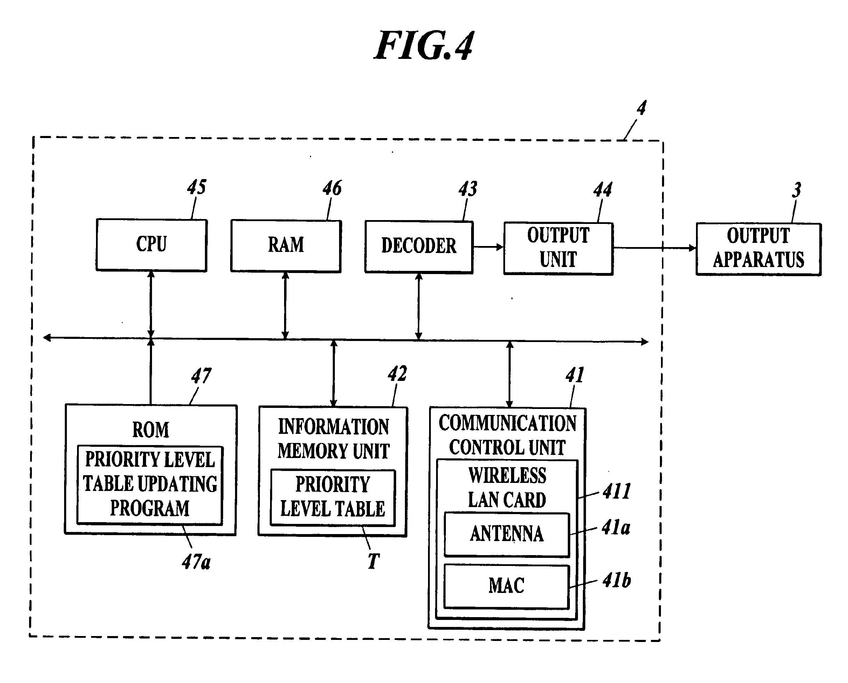

Next, the client terminal apparatus 4 will be described with reference to FIG. 4. FIG. 4 is a block diagram illustrating the main structure of the client terminal apparatus 4.

The client terminal apparatus 4, as shown in FIG. 4, for example, comprises a communication control unit 41 for providing the communication with the server apparatus 2 via the wireless network N, an information memory unit 42 for storing the priority level table T received via this communication control unit 41, a decoder 43 for decoding various types of encoded information received by the communication control unit 41, an output unit 44 for outputting various types of information to the output apparatus 3, a CPU 45, a RAM 46, a ROM 47, and the like.

The communication control unit 41, for example, as same as the communication control unit 21 included in the server apparatus 2, includes a wireless LAN card 411 including an antenna 41a and a MAC 41b and the like, and sends and receives various types of information to and from the server apparatus 2 via the wireless network N.

Specifically, the communication control unit 41, for example, as a priority level information receiving unit, receives the priority level table T transmitted from the communication control unit 21 of the server apparatus 2.

The received priority level table T is transmitted to the information memory unit 42 to be stored therein.

The MAC 41b, as a client-side usable channel setting unit, for example, as same as the MAC 21b of the server 2, sets the usable channels of the wireless LAN in the order of descending priority levels based on the priority levels of channels prescribed in the priority level table T received via the communication control unit 41 when reconnecting to the server 2.

The information memory unit 42, for example, has substantially the same structure as that of the information memory unit 22 included in the server apparatus 2. The information memory unit 42 functions as a client-side priority level information memory unit to store the priority level table T received via the communication control unit 41.

The decoder 43, for example, performs a process according to the file format of each of various types of encoded information which are received from the communication control unit 41 and decode the encrypted information to the predetermined information.

The output unit 44, for example, includes an output terminal (omitted from the drawings) connected to an input terminal of the output apparatus 3 such as television apparatus or the like (omitted from the drawings), and outputs image information and audio information decrypted by the decoder 43 to the output apparatus 3.

The output apparatus 3 is a general apparatus such as a television apparatus and thus will not be described in detail.

The CPU 45 controls each of the components of the client terminal apparatus 4 integrally. The CPU 45 reads various programs stored in the ROM 47and expands the programs on a work area of the RAM 46 and executes various types of processes based on these programs.

As for the RAM 46, for example, a rewritable memory can be used. And the RAM 46 constitutes a storage area and a work area and the like for programs and various types of data or the like read from the ROM 47 under the control of the CPU 45.

The ROM 47, for example, is a read-only memory and stores various programs executed under the control of the CPU 45 and data or the like regarding the processing of these programs. Specifically, the priority level table updating program 47a is stored in the ROM 28. This priority level table updating program 47a makes the CPU 45, as the client-side priority level information updating unit, to realize the function according to the process which updates the information priority level T stored in the information memory unit 42 every time when the priority level table T transmitted from the communication control unit 21 of the server apparatus 2 is received via the communication control unit 41.

That is, after the priority level table T is updated by the MAC 21b of the server apparatus 2, due to the wireless link between the server apparatus 2 and the client terminal apparatus become not connected, the CPU 45 updates the information of the priority level table T stored in the information memory unit 42 beforehand based on the execution of the priority level table updating program 47a every time when the priority level table T sent from the communication control unit 21 of the server apparatus 2 is received via the communication control unit 41 of the client terminal apparatus 4

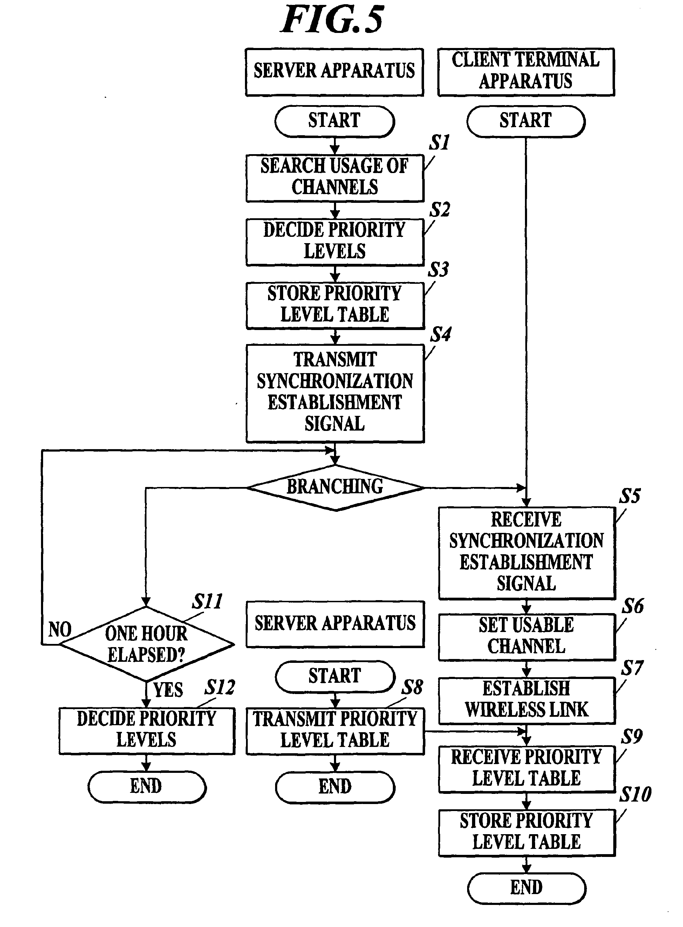

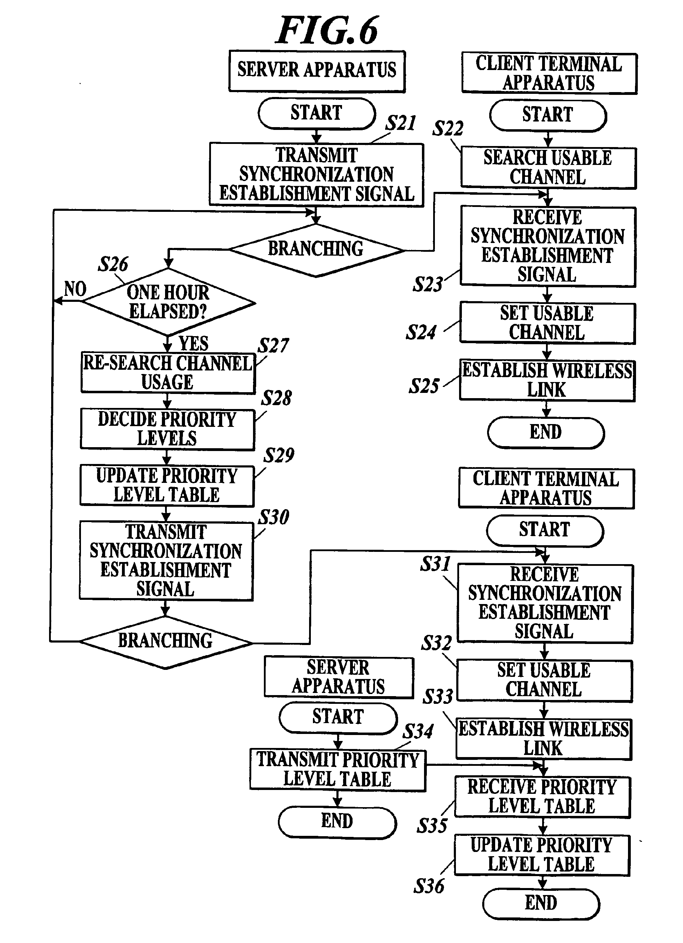

Next, a link establishment process by the client-server system 100 will be described with reference to FIGS. 5 and 6.

FIGS. 5 and 6 are flowcharts showing an example of operations in the link establishment process. Specifically, FIG. 5 shows the first link establishment process in which a wireless link between the server apparatus 2 and the client terminal apparatus 4 is established for the first time. FIG. 6 shows a link establishment process after the first establishment onwards for reestablishing the wireless link and for updating the priority level table T.

The server apparatus 2 and the client terminal apparatus 4 are provided with an identical ID so that the system can be differentiated from other systems.

First, with reference to FIG. 5, the first link establishment process will be described.

In a status where the wireless link between the server apparatus 2 and the client terminal apparatus 4 is not yet established after the power source of the server apparatus 2 is turned on, the MAC 21b of the communication control unit 21 searches the usage (availabilities) of the plurality of channels of the wireless LAN (Step S1).

Next, based on the search result of the usage of the plurality of channels, the MAC 21b decides priority levels of the use of the plurality of channels (Step S2).

When the priority levels are decided, then the priority levels are stored as the priority level table T in the information memory unit 22 under the control of the CPU 26(Step S3).

Thereafter, the MAC 21b sets the channels as usable channels of the wireless LAN in the order of descending priority levels based on the priority levels of the priority level table T. Then, the MAC 21b transmits a predetermined synchronization establishment signal at a substantially fixed interval on the set channel (Step S4).

After the power source of the client terminal apparatus 4 is turned on, the MAC 41b of the communication control unit 41 sequentially searches the plurality of channels. When a synchronization establishment signal sent from the communication control unit 21 of the server apparatus 2 is received (Step S5), the MAC 41b identifies a channel related to the synchronization establishment signal and set the channel as a usable channel (Step S6).

Next, when the wireless link between the server apparatus 2 and the client terminal apparatus 4 is established via the usable channel (Step S7), the communication control unit 21 of the server apparatus 2 sends the priority level table T to the client terminal apparatus 4 under the control of the CPU 26, (Step S8).

In the client terminal apparatus 4, when the client terminal apparatus 4 receives the priority level table T transmitted from the server apparatus 2 via the communication control unit 41 (Step S9), the CPU 45 transmits the priority level table T to the information memory unit 42 and the priority level table T is stored in the information memory unit 42 (Step S10).

When the wireless link is not established even when the synchronization establishment signal is transmitted, the MAC 21b of the server apparatus 2 searches the usage of a plurality of channels every one hour elapsed time (Step S11; YES) to decide the priority levels of the channels (Step S12).

Next, a link establishment process after the first establishment onward will be described with reference to FIG. 6.

In the following description, it is assumed that the information of priority levels at a predetermined time is previously stored in the priority level table T.

In a status where the wireless link between the server apparatus 2 and the client terminal apparatus 4 is not yet established after the power source of the server apparatus 2 is turned on, the MAC 21b of the communication control unit 21 sets the channels as usable channels in the order of descending priority levels of the wireless LAN based on the priority levels in the priority level table T stored in the information memory unit 22. Then, the MAC 21b transmits a predetermined synchronization establishment signal on the set channel at a substantially fixed interval (Step S21).

At this time when the power source of the client terminal apparatus 4 is turned on and the establishment of the wireless link is instructed, the MAC 41b of the communication control unit 41 searches the plurality of channels according to the priority levels of the priority level table T stored in the information memory unit 42 (Step S22). When the synchronization establishment signal of the predetermined channel sent from the communication control unit 21 of the server apparatus 2 is received via communication control unit 41 (Step S23), the MAC 41b sets the channel related to the synchronization establishment signal as the usable channel (Step S24). Next, the wireless link between the server apparatus 2 and the client terminal apparatus 4 is established on this usable channel (Step S25).

When the wireless link is not established even when the synchronization establishment signal is transmitted, the MAC 21b of the server apparatus 2 re-searches the usage of the plurality of channels of the wireless LAN (Step S27) every one hour elapsed time (Step S26 ; Yes). Then, the MAC 21b decides the priority levels for the use of the plurality of channels based on the search result of the usage of the plurality of channels (Step S28).

When the priority levels are decided, the CPU 26 executes the priority level table update program 28a to update the information for the priority level table T stored in the information memory unit 22 to the latest information (Step S29).

Thereafter, the MAC 21b sets the channels as the usable channels in the order of descending priority levels of the wireless LAN based on the priority levels of the updated priority level table T. Then, the MAC 21b transmits a predetermined synchronization establishment signal on the set channel at a substantially fixed interval (Step S30).

When the establishment of the wireless link is instructed at the client terminal apparatus 4 and when the wireless link between the server apparatus 2 and the client terminal apparatus 4 is established (Step S31 to Step S33) in the same process as step S23 through step S25 by the MAC 41b of the communication control unit 41, the communication control 21 of the server apparatus 2 transmits the updated priority level table T to the client terminal apparatus 4 under the control of the CPU 26 (Step S34).

When the client terminal apparatus 4 receives the priority level table T sent from the server apparatus 2 via the communication control unit 41 (Step S35), the CPU 45 executes the priority level table update program 28a to update the information for the priority level table T stored in the information memory unit 22 to the latest information (Step S36).

As described above, according to the client-server system 100 of the present embodiment, the server apparatus 2 having no connection with the client terminal apparatus 4 searches the usages of the plurality of channels in the wireless LAN to decide the priority levels of use of the plurality of channels based on the search result. The channels are set as the usable channels in the order of descending priority levels of the wireless LAN based on the decided priority levels. Therefore, the usable channel can be set beforehand by considering the usage of plurality of the channels of the wireless LAN in the server apparatus 2, at the time of the establishment of the wireless LAN link between the client terminal apparatus 4 and the server apparatus 2. Thus, the wireless LAN link can be established more promptly and as a result, the client-server system 100 which is user-friendly can be provided.

The server apparatus 2, in a status being connected with the client terminal apparatus 4 can send the priority level table T to the client terminal apparatus 4 by the communication control unit 21. Furthermore, the client terminal apparatus 4 can set channels in the order of descending priority levels as usable channels in the wireless LAN by the MAC 41b based on the priority levels according to the priority level table received by the communication control unit 41. Thus, when the wireless LAN link between the server apparatus 2 and the client terminal apparatus 4 is re-established after the link is once cut, the client terminal apparatus 4 can set the usable channels by considering the usage of plurality of the channels of the wireless LAN based on the priority level table T which is received at the time of the establishment of the wireless LAN link between the client terminal apparatus 4 and the server apparatus 2.

Furthermore, when the wireless LAN link between the server apparatus 2 and the client terminal apparatus 4 is to be established, the server apparatus 2 can more swiftly set the usable channels based on the priority level table T stored in the information memory unit 22. When the server apparatus 2 is to be connected to the client terminal apparatus 4, the server apparatus 2 can use the communication control unit 21 to transmit the priority level table T to the client terminal apparatus 4.

When the wireless LAN link between the client terminal apparatus 4 and the server apparatus 2 is to be reestablished after the link is once cut, the client terminal apparatus 4 can more swiftly set the usable channels based on the priority level table T that is received via the communication control unit 41 and stored in the information memory unit 42.

Furthermore, the server apparatus 2 can update the priority level table T stored in the information memory unit 22 every time when the priority levels for use of the plurality of channels are decided. Thus, the usable channels can be set more properly based on the updated priority level table T.

The client terminal apparatus 4 can update the priority level table T stored in the information memory unit 42 every time when the priority level table T sent from the server apparatus 2 is received by the communication control unit 41. Thus, when the wireless LAN link between server apparatus 2 and the client terminal apparatus 4 is to be reestablished after the link is once cut, the usable channels can be set more properly based on the updated priority level table T.

Furthermore, the server apparatus 2 can acquire search time information regarding a search time for usage of the plurality of channels. Thus, usages of the plurality of channels at a predetermined time can be obtained based on the search time information, and the usable channels can be more properly set depending on a time zone.

Further, the priority level table T including the search time information is sent to the client terminal apparatus 4. Thus, when the wireless LAN link between the client terminal apparatus 4 and the server apparatus 2 is to be reestablished after the link is once cut, the client terminal apparatus 4 can set the usable channels more properly based on the obtained search time information according to the time zone.

The present invention is not limited to the above embodiments and may be subjected to various modifications and design changes within the scope of the present invention.

For example, although the server apparatus 2 is structured to send the generated priority level table T to the client terminal apparatus 4 so that the client terminal apparatus 4 can use the priority level table T to set the usable channels, the present invention is not limited to this. Whether the priority level table T is to be sent from the server apparatus 2 to the client terminal apparatus 4 or not may be changed appropriately.

Although it is stated that the server apparatus 2 and the client terminal apparatus 4 include the information memory units 22 and 42 for storing the priority level table T, respectively, the present invention is not limited to this. Whether the server apparatus 2 and the client terminal apparatus 4 respectively include the information memory units 22 and 42 or not also may be changed individually.

Furthermore, although the above embodiment generates the priority level table T several times per day at a predetermined times, the present invention is not limited to this. The priority level table T may be generated once in a day at one predetermined time.

Although the priority level table T was updated as needed, the present invention is not limited to this. Another configuration also may be used where, once the priority level table T is prepared, the priority level table T may be continuously used without update. That is, when the client-server system 100 is used under an environment in which the line is not busy, there is a case where it is only required to set a predetermined channel once and the second setting is not required.

Although the above embodiment uses the wireless LAN cards 211 and 411 for the connection to the wireless network N, the present invention is not limited to this. Any configuration may be used as long as the configuration allows the wireless LAN to be established.

The entire disclosure of Japanese Patent Application No. Tokugan 2005-326264 filed on November 10, 2005 including specification, claims, drawings and summary are are relevant to the present invention.

## Claims

1. A client-server system (100) in which a client terminal apparatus (4) and a server apparatus (2) are connected via one of a plurality of channels of a wireless LAN (N) to have communication therebetween, wherein:
the server apparatus comprises:
a channel usage search unit (21 b) which is adapted to search a usage of the plurality of channels when the server apparatus is in a no-connection status with the client terminal apparatus;
a priority level deciding unit (21 b) which is adapted to decide priority levels of use of the plurality of channels based on the search result of a channel usage search unit;
a server-side usable channel setting unit (21 b) which is adapted to set the channels as usable channels of the wireless LAN in an order of descending priority levels based on the priority levels decided by the priority level deciding unit when the server apparatus connects with the client terminal apparatus;
**characterized by**
a search time information acquisition unit (25) which is adapted to acquire search time information regarding a search time by the channel usage search unit indicating a time zone for the usage of the plurality of channels;
a priority level information transmission unit (21) which is adapted to transmit priority information regarding the priority levels decided by the priority level deciding unit, including the search time information acquired by the search time information acquisition unit, to the client terminal apparatus when the server apparatus is in a connection status with the client terminal apparatus;
the client terminal apparatus comprises:
a priority level information receiving unit (41) which is adapted to receive the priority level information, including the search time information, transmitted from the priority level information transmission unit; and
a client-side usable channel setting unit (41b) which is adapted to set the channels as usable channels of the wireless LAN in the order of descending priority levels based on the priority level according to the priority level information and based on the time zone indicated by the search time information received by the priority level information receiving unit when the client terminal apparatus reconnects to the server apparatus.

2. The client-server system as claimed in claim 1, wherein:
the server apparatus comprises:
a server-side priority level information memory unit (22) which is adapted to store the priority level information; and wherein
the priority level information transmission unit is further adapted to transmit the priority level information read from the priority level information memory unit to the client terminal apparatus when the server apparatus is connected to the client terminal apparatus; and wherein
the client terminal apparatus comprises:
a Gient-side priority level information memory unit (42) which is adapted to store the priority level information, which is transmitted by the priority level information transmission unit and is received by the priority level information receiving unit.

3. The client-server system as claimed in claim 2; the server apparatus comprises:
a server-side priority level information updating unit (26) which is adapted to update the priority level information stored in the server-side priority level information memory unit every time when the priority levels of the use of the plurality of channels are decided by the priority level deciding unit, and wherein
the client terminal apparatus comprises:
a client-side priority level information updating unit (45) which is adapted to update the priority level information stored in the client-side priority level information memory unit every time when the priority level information which is transmitted from the priority level information transmission unit is received by the priority level information receiving unit.

4. A server apparatus (2) which is connected to a client terminal apparatus (4) via one of a plurality of channels of a wireless LAN (N) to have communication therebetween, comprising:
a channel usage search unit (21 b) which is adapted to search a usage of the plurality of channels when the server apparatus is in a no-connection status with the client terminal apparatus,
a priority level deciding unit (21 b) which is adapted to decide priority levels of use of the plurality of channels based on a search result by the channel usage search unit,
an usable channel setting unit (21b) which is adapted to set the channels as usable channels of the wireless LAN in an order of descending priority levels based on the priority levels decided by the priority level deciding unit when the server apparatus connects with the client terminal apparatus, and
**characterized by**
a search time information acquisition unit (25), which is adapted to acquire search time information regarding a search time by the channel usage search unit, indicating a time zone for the usage of the plurality of channels.

## Patentansprüche

1. Ein Client-Serversystem (100) in welchem ein Clientdatenendgerät (4) und ein Servergerät (2) via einem aus einer Vielzahl von Kanälen eines kabellosen LAN (N) verbunden sind um eine Kommunikation dazwischen aufzuweisen, wobei:
das Servergerät umfasst:
eine Kanalnutzungsuntersucheinheit (21 b), welche angepasst ist, eine Nutzung der Vielzahl von Kanälen zu untersuchen, wenn das Servergerät in einem nicht-Verbindungszustand mit dem Clientdatenendgerät ist;
eine Prioritätsgradentscheidungseinheit (21 b), die angepasst ist, Prioritätsgrade der Nutzung der Vielzahl von Kanälen zu entscheiden, basierend auf dem Untersuchungsergebnis der Kanalnutzungsuntersucheinheit;
eine serverseitige Einheit (21 b) zum Festlegen eines verwendbaren Kanals, die angepasst ist, die Kanäle als verwendbare Kanäle des kabellosen LAN festzulegen in einer Reihenfolge mit absteigenden Prioritätsgraden, basierend auf den Prioritätsgraden, die durch die Prioritätsgradentscheidungseinheit entschieden wurden, wenn das Servergerät sich mit dem Clientdatenendgerät verbindet;
**gekennzeichnet durch**
eine Suchzeitinformationsbeschaffungseinheit (25), die angepasst ist, Suchzeitinformation zu beschaffen bezüglich einer Suchzeit **durch** die Kanalnutzungsuntersucheinheit, die eine Zeitzone für die Nutzung der Vielzahl von Kanälen angibt;
eine Prioritätsgradinformationsübertragungseinheit (21), die angepasst ist, Prioritätsinformation bezüglich der Prioritätsgrade, die **durch** die Prioritätsgradentscheidungseinheit entschieden wurden, inklusive der Suchzeitinformation, die **durch** die Suchzeitinformationsbeschaffungseinheit beschafft wurde, an das Clientdatenendgerät zu übertragen, wenn das Servergerät sich in einem Verbindungszustand mit dem Clientdatenendgerät befindet;
wobei das Clientdatenendgerät umfasst:
eine Prioritätsgradinformationsempfangseinheit (41), die angepasst ist, die Prioritätsgradinformation zu empfangen, inklusive der Suchzeitinformation, die von der Prioritätsgradinformationsübertragungseinheit übertragen wurde; und
eine clientseitige Einheit (41b) zum Festlegen eines verwendbaren Kanals (41b), die angepasst ist, die Kanäle als verwendbare Kanäle des kabellosen LANs festzulegen in einer Reihenfolge mit absteigenden Prioritätsgraden, basierend auf dem Prioritätsgrad, gemäß der Prioritätsgradinformation und basierend auf der Zeitzone, die **durch** die Suchzeitinformation angegeben wird, die **durch** die Prioritätsgradinformationsempfangseinheit empfangen wurde, wenn das Clientdatenendgerät sich mit dem Servergerät wiederverbindet.

2. Das Client-Serversystem nach Anspruch 1, wobei:
das Servergerät umfasst:
eine serverseitige Prioritätsgradinformationsspeichereinheit (22), die angepasst ist die Prioritätsgradinformation zu speichern; und wobei
die Prioritätsgradinformationsübertragungseinheit weiterhin angepasst ist die Prioritätsgradinformation, die von der Prioritätsgradinformationsspeichereinheit gelesen wurde, an das Clientdatenendgerät zu übertragen, wenn das Servergerät mit dem Clientdatenendgerät verbunden ist; und wobei
das Clientdatenendgerät umfasst:
eine clientseitige Prioritätsgradinformationsspeichereinheit (42), die angepasst ist die Prioritätsgradinformation zu speichern, die durch die Prioritätsgradinformationsübertragungseinheit übertragen wurde und durch die Prioritätsgradinformationsempfangseinheit empfangen wurde.

3. Das Clientserversystem nach Anspruch 2, wobei das Servergerät umfasst:
eine serverseitige Prioritätsgradinformationsaktualisierungseinheit (26), die angepasst ist die Prioritätsgradinformation, die in der serverseitigen Prioritätsgradinformationsspeichereinheit gespeichert ist, jedes Mal zu aktualisieren, wenn die Prioritätsgrade der Nutzung der Vielzahl von Kanälen durch die Prioritätsgradentscheidungseinheit entschieden werden, und wobei
das Clientdatenendgerät umfasst:
eine clientseitige Prioritätsgradinformationsaktualisierungseinheit (45), die angepasst ist die Prioritätsgradinformation, die in der clientseitigen Prioritätsgradinformationsspeichereinheit gespeichert ist jedes Mal zu aktualisieren wenn die Prioritätsgradinformation, die von der Prioritätsgradinformationsübertragungseinheit übertragen wurde durch die Prioritätsgradinformationsempfangseinheit empfangen wird.

4. Ein Servergerät (2), welches mit einem Clientdatenendgerät (4) via einem aus einer Vielzahl von Kanälen eines kabellosen LAN (N) verbunden ist, um eine Kommunikation dazwischen aufzuweisen, umfassend:
eine Kanalnutzungsuntersucheinheit (21 b), die angepasst ist eine Nutzung der Vielzahl von Kanälen zu untersuchen, wenn das Servergerät sich in einem nicht-Verbindungszustand mit dem Clientdatenendgerät befindet,
eine Prioritätsgradentscheidungseinheit (21 b), die angepasst ist, die Prioritätsgrade der Nutzung der Vielzahl von Kanälen zu entscheiden basierend auf einem Untersuchungsergebnis der Kanalnutzungsuntersucheinheit,
eine Einheit (21 b) zum Festlegen eines verwendbaren Kanals, die angepasst ist, die Kanäle als verwendbare Kanäle des kabellosen LANs festzulegen in einer Reihenfolge mit absteigenden Prioritätsgraden, basierend auf den Prioritätsgraden, die durch die Prioritätsgradentscheidungseinheit entschieden wurden, wenn das Servergerät sich mit dem Clientdatenendgerät verbindet, und
**gekennzeichnet durch**
eine Suchzeitinformationsbeschaffungseinheit (25), die angepasst ist, Suchzeitinformationen zu beschaffen, bezüglich einer Suchzeit **durch** die Kanalnutzungsuntersucheinheit, die eine Zeitzone für die Nutzung der Vielzahl von Kanälen angibt.

## Revendications

1. Système client-serveur (100) dans lequel un appareil terminal client (4) et un appareil serveur (2) sont connectés par l'un d'une pluralité de canaux d'un réseau local LAN sans fil (N) pour communiquer entre eux, étant précise :
que l'appareil serveur comprend :
une unité de recherche d'utilisation de canaux (21b) qui est apte à rechercher une utilisation de la pluralité de canaux quand l'appareil serveur est dans un état de non connexion avec l'appareil terminal client ;
une unité de détermination de niveau de priorité (21b) qui est apte à déterminer des niveaux de priorité de l'utilisation de la pluralité de canaux, à partir du résultat de recherche d'une unité de recherche d'utilisation de canaux ;
une unité de réglage de canaux utilisables côté serveur (21b) qui est apte à régler les canaux comme canaux utilisables du réseau LAN sans fil dans un ordre de niveaux de priorité descendants sur la base des niveaux de priorité déterminés par l'unité de détermination de niveau de priorité, quand l'appareil serveur se connecte à l'appareil terminal client ;
**caractérisé par**
une unité d'acquisition d'informations de temps de recherche (25) qui est apte à acquérir des informations de temps de recherche concernant un temps de recherche par l'unité de recherche d'utilisation de canaux, les informations de temps de recherche indiquant une plage de temps pour l'utilisation de la pluralité de canaux ;
une unité de transmission d'informations de niveau de priorité (21) qui est apte à transmettre à l'appareil terminal client des informations de priorité concernant les niveaux de priorité déterminés par l'unité de détermination de niveau de priorité, y compris les informations de temps de recherche acquises par l'unité d'acquisition d'informations de temps de recherche, quand l'appareil serveur est dans un état de connexion avec l'appareil terminal client ;
l'appareil terminal client comprend :
une unité de réception d'informations de niveau de priorité (41) qui est apte à recevoir les informations de niveau de priorité, y compris les informations de temps de recherche, transmises à partir de l'unité de transmission d'informations de niveau de priorité ; et
une unité de réglage de canaux utilisables côté client (41b) qui est apte à régler les canaux comme canaux utilisables du réseau LAN sans fil par ordre de niveaux de priorité descendants, sur la base du niveau de priorité selon les informations de niveau de priorité et sur la base de la plage de temps indiquée par les informations de temps de recherche reçues par l'unité de réception d'informations de niveau de priorité quand l'appareil terminal client se reconnecte à l'appareil serveur.

2. Système client-serveur selon la revendication 1, dans lequel :
l'appareil serveur comprend :
une unité de mémoire d'informations de niveau de priorité côté serveur (22) qui est apte à stocker les informations de niveau de priorité ; et dans lequel :
l'unité de transmission d'informations de niveau de priorité est par ailleurs apte à transmettre à l'appareil terminal client les informations de niveau de priorité lues à partir de l'unité de mémoire d'informations de niveau de priorité, quand l'appareil serveur est connecté audit appareil terminal client ; et dans lequel
l'appareil terminal client comprend :
une unité de mémoire d'informations de niveau de priorité côté client (42) qui est apte à stocker les informations de niveau de priorité transmises par l'unité de transmission d'informations de niveau de priorité et reçues par l'unité de réception d'informations de niveau de priorité.

3. Système client-serveur selon la revendication 2, l'appareil serveur comprenant :
une unité d'actualisation d'informations de niveau de priorité côté serveur (26) qui est apte à actualiser les informations de niveau de priorité mises en mémoire dans l'unité de mémoire d'informations de niveau de priorité côté serveur, à chaque fois que les niveaux de priorité de l'utilisation de la pluralité de canaux sont déterminés par l'unité de détermination de niveau de priorité, et dans lequel
l'appareil terminal client comprend :
une unité d'actualisation d'informations de niveau de priorité côté client (45) qui est apte à actualiser les informations de niveau de priorité mises en mémoire dans l'unité de mémoire d'informations de niveau de priorité côté client, à chaque fois que les informations de niveau de priorité qui sont transmises à partir de l'unité de transmission d'informations de niveau de priorité sont reçues par l'unité de réception d'informations de niveau de priorité.

4. Appareil serveur (2) qui est connecté à un appareil terminal client (4) par l'intermédiaire de l'un de la pluralité de canaux d'un réseau LAN sans fil (N) pour obtenir une communication entre eux, comprenant :
une unité de recherche d'utilisation de canaux (21b) qui est apte à rechercher une utilisation de la pluralité de canaux quand l'appareil serveur est dans un état de non connexion avec l'appareil terminal client ;
une unité de détermination de niveau de priorité (21b) qui est apte à déterminer des niveaux de priorité de l'utilisation de la pluralité de canaux, à partir d'un résultat de recherche d'une unité de recherche d'utilisation de canaux ;
une unité de réglage de canaux utilisables (21b) qui est apte à régler les canaux comme canaux utilisables du réseau LAN sans fil dans un ordre de niveaux de priorité descendants sur la base des niveaux de priorité déterminés par l'unité de détermination de niveau de priorité, quand l'appareil serveur se connecte à l'appareil terminal client ; et
**caractérisé par**
une unité d'acquisition d'informations de temps de recherche (25) qui est apte à acquérir des informations de temps de recherche concernant un temps de recherche par l'unité de recherche d'utilisation de canaux, indiquant une plage de temps pour l'utilisation de la pluralité de canaux.
